# EUROPEAN PATENT SPECIFICATION

(11) **EP 2 607 172 B1**
(45) Date of publication and mention of the grant of the patent: **12.08.2015**
(21) Application number: 12197960.3
(22) Date of filing: 19.12.2012
(51) Int. Cl.: B60R 1/06

(54) **Rear view side mirror assembly**
Seitenrückspiegelanordnung
Ensemble rétroviseur latéral de vue arrière

(30) Priority: 20.12.2011 GB 201121862
(43) Date of publication of application: 26.06.2013
(73) Proprietor: Nissan Motor Manufacturing (UK) Ltd., Cranfield Bedfordshire MK43 0DB (GB)
(72) Inventor: Kenion, Troy, Cranfield, MK43 0DB (GB); Le Good, Geoffrey Mark, Cheshire, CW9 8WD (GB)

(56) References cited:
- EP-A2- 0 318 690
- EP-A2- 0 333 220
- GB-A- 2 130 990
- GB-A- 2 396 881

## Description

### Field of the Invention

The present invention relates to a rear view side mirror assembly for a vehicle.

### Background Art

Vehicles, such as cars and other automobiles, are typically provided with rear view mirrors to facilitate reversing the vehicle and the execution of other manoeuvres by enabling a driver to see to the rear of the vehicle without physically turning around. One type of rear view mirror is a side or wing mirror. In the case of cars, rear view side mirrors are typically provided on each of the driver side and passenger side doors such that they can be viewed through the respective driver and passenger side windows.

A typical rear view side mirror comprises a mirror casing which houses a mirrored panel. Since the plane of the mirrored panel must be oriented approximately perpendicular to the direction of travel of the vehicle, the mirror casings of rear view side mirrors project outward from the body of the vehicle. Accordingly, rear view side mirrors contribute significantly to a car's aerodynamic drag and can cause turbulent air flow. This is particularly problematic in the case of high performance cars where it is desirable to decrease any source of drag to increase the car's aerodynamic efficiency.

Additionally, high performance cars with rear- or mid-mounted engines typically have additional air cooling intakes mounted towards the rear of the vehicle body. Air cooling efficiency is an issue where cooling a rear engine bay area becomes a significant factor in vehicle performance. This also applies to electric and hybrid vehicles where it is important to keep the battery pack cool. It is desirable to provide cold air to help maintain low temperatures and improve battery life. Air flow at the front end of the car can disturb the air cooling intakes at the rear of the car. This, in turn, affects cooling performance, which has a negative impact on the overall performance of the car.

For the reasons given above, air flow control is very important for performance vehicles with rear air intakes, and particularly so where the vehicle is an electric/hybrid vehicle with a battery pack.

A number of examples of rear view side mirror assemblies which address issues of vehicle aerodynamics are known in the art. In particular, United States Design Patent No. 519,071 in the name of Ferrari S.p.A. relates to a rear view side mirror in which the mirror casing is supported by a twin stem which is oriented substantially horizontally to the vehicle body. United States Patent No. 4,538,851 in the name of General Motors Corporation relates to an aerodynamic rear view mirror mounted within a streamlined mirror mount. Additionally, the car with the designated model number E90 manufactured by BMW (RTM) is provided with rear view side mirrors having various shaped features to minimise aerodynamic drag.

GB 2 396 881 A (Ford Global Tech LLC) discloses the preamble of claim 1. EP 0333220 (Bayerische Motoren Werke AG), GB 2 130 990 A (Saab Scania AB), EP 0318690 (Bayerische Motoren Werke AG) also disclose mirror assemblies with streamlined features. None of the prior art discloses mirror assemblies that assist improving cooling efficiency. It is an object of the present invention to provide a rear view side mirror assembly which substantially overcomes or mitigates at least some of the above-mentioned problems.

### Summary of the Invention

According to a first aspect of the present invention, there is provided a rear view side mirror assembly for a vehicle comprising a head portion for housing a mirror, and a stem portion for coupling the head portion to the body of a vehicle, wherein the stem portion has an aerofoil cross-section and the stem portion comprises an inboard surface arranged to face toward the body of the vehicle when attached thereto, and an outboard surface arranged to face away from the body of the vehicle when attached thereto, wherein each of said inboard and outboard surfaces are cambered. The camber of the inboard surface is substantially parallel to the adjacent surface of the car body, and the camber of the inboard surface of the stem portion is furthermore relatively flat compared to the camber of the outboard surface of the stem portion so as to minimise turbulence in the flow of air thereacross, in use, and the camber of the outboard surface of the stem portion is arranged such that the flow of air thereacross is directed in an inboard direction so as to merge with the flow of air across the inboard surface of the stem portion at a point downstream of the mirror assembly, in use.

Thus, in use, the aerodynamic drag of the mirror assembly is reduced which improves the overall performance of a vehicle on which the mirror assembly is mounted. Furthermore, the wind noise is also advantageously reduced.

Thus the plane of the aerofoil surfaces of the stem portion are conveniently aligned with the direction of travel of a vehicle to which the mirror assembly may be mounted, in use.

Conveniently, the head portion comprises an inboard surface and an outboard surface, wherein the inboard surface of the head portion has substantially the same, camber as the inboard surface of the stem portion.

Conveniently, the head portion comprises an inboard surface and an outboard surface, wherein the outboard surface of the head portion is arranged such that the flow of air thereacross is directed in an inboard direction so as to merge with the flow of air across the inboard surface of the head portion at a point downstream of the mirror assembly, in use.

Preferably, the inboard surface of the head portion is continuous with the inboard surface of the stem portion. Thus the air flow across the inboard surfaces of the mirror assembly is advantageously diffused, reducing wind noise.

Conveniently, the head portion comprises a lower surface and the stem portion extends from the lower surface of the head portion. Thus, the head portion is spaced apart from the surface of a vehicle to which the mirror assembly is mounted, thereby reducing wind noise.

Preferably, the head portion comprises a lower surface having a substantially flat camber.

Conveniently, the head portion comprises a rear surface, the rear surface comprising an opening therein for accommodating a mirror plate.

Preferably, the cross-section of the stem portion is substantially the same along its length.

Conveniently, the stem portion and the head portion are formed integrally with one another.

Preferably, the stem portion comprises connecting means disposed at a first end thereof, opposite the head portion, for connecting the stem portion to the body of the vehicle.

Preferably, the cross-section of the stem portion is substantially the same along its length.

Conveniently, the stem portion and the head portion are formed integrally with one another.

Preferably, the stem portion comprises connecting means disposed at a first end thereof, opposite the head portion, for connecting the stem portion to the body of the vehicle.

According to a second aspect of the present invention, there is provided a vehicle having a vehicle body and comprising a rear view side mirror assembly as described above mounted on a side of the vehicle body. Thus, in use, the aerodynamic drag of the mirror assembly is reduced which improves the overall performance of the vehicle.

Conveniently, the side of the vehicle body comprises a shoulder portion and the stem portion of the rear view side mirror assembly is mounted on the shoulder portion.

Preferably, the vehicle comprises at least one A-pillar and the rear view side mirror assembly is mounted adjacent to a base of the at least one A-pillar.

Advantageously, the vehicle comprises an air intake disposed in the side of the vehicle body downstream of the rear view side mirror assembly. Preferably, the rear view side mirror assembly is mounted such the head portion is spaced from the side of the vehicle body, by virtue of the stem portion, so as to allow, in use, the unobstructed flow of air along the side of the vehicle body into the air intake.

The vehicle may be rear- or mid-engined and the air intake provides cooling for the engine.

The vehicle may a hybrid or electric vehicle and the air intake provides cooling for a battery pack.

It will be appreciated that preferred and/or optional features of the first aspect of the invention may be incorporated alone or in appropriate combination in the vehicle of the second aspect.

### Brief Description of the Drawings

Embodiments of the present invention will now be described, by way of example only, with reference to the accompanying drawings in which like reference numerals are used for like parts, and in which;
Figure 1 is a perspective view of a simulated air flow about a rear view side mirror assembly according to an embodiment of the present invention mounted on a vehicle;
Figure 2A is a side view of the rear view side mirror assembly and vehicle shown in Figure 1;
Figure 2B is a side view of the opposite side of the vehicle shown in Figure 2A;
Figure 2C is a plan view of the vehicle shown in Figure 2B;
Figure 3 is a front view of a rear view side mirror assembly according to an embodiment of the present invention;
Figure 4 is a side view of the rear view mirror assembly shown in Figure 3 showing an outboard surface of the mirror assembly;
Figure 5 is a top plan view of the rear view side mirror assembly shown in Figure 3 showing an upper surface of the mirror assembly;
Figure 6 is a rear view of the rear view side mirror assembly shown in Figure 3 showing a rear surface and a mirror plate of the mirror assembly;
Figure 7 is a perspective view of the rear view side mirror assembly shown in Figure 3 showing rear and inboard surfaces of the mirror assembly;
Figure 8 is a front view of the rear view side mirror assembly of Figures 3 to 7 mounted on a vehicle;
Figure 9 is a schematic cross-section of a symmetrical aerofoil;
Figure 10 is a diagrammatic cross-section of a rear view side mirror assembly according to an embodiment of the present invention;
Figure 11 is a part cross-sectional view of the vehicle shown in Figure 2C viewed in the direction of the arrow A;
Figure 12 is a part cross-sectional view of the vehicle shown in Figure 2A viewed in the direction of the arrow B;
Figure 13 is a part cross-sectional view of the vehicle shown in Figure 2A viewed in the direction of the arrow C;
Figure 14 is a part cross-sectional view of the vehicle shown in Figure 2C viewed in the direction of the arrow D; and
Figure 15 is an enlarged view of a rear view side mirror assembly shown in Figure 11.

### Detailed Description of the Preferred Embodiments

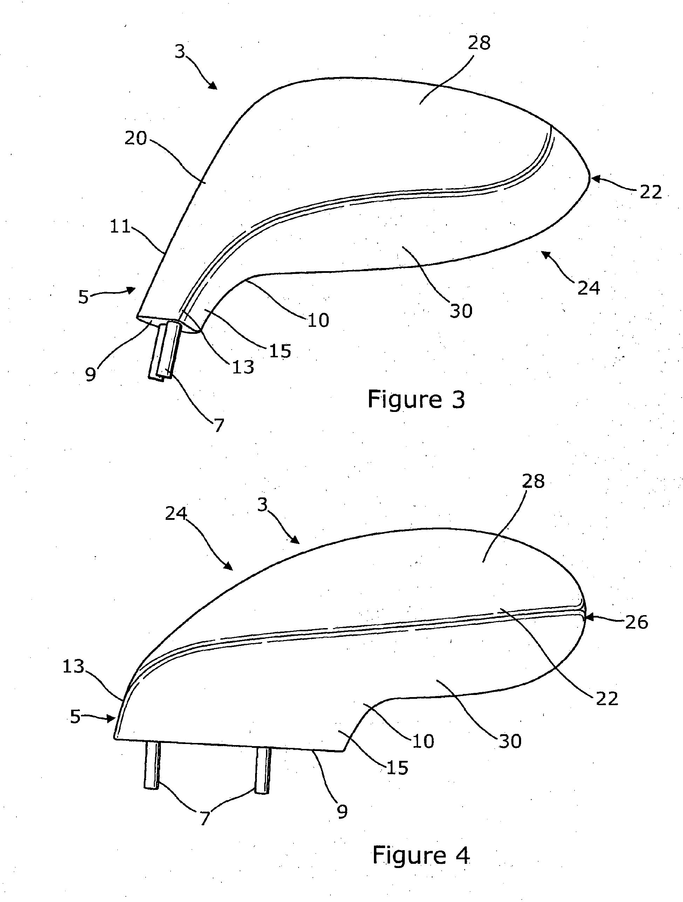

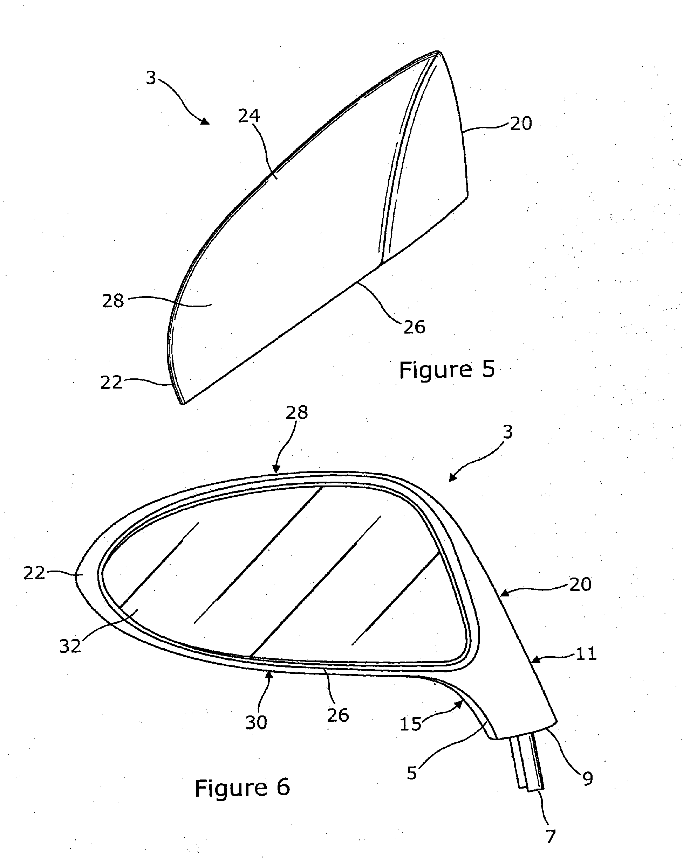

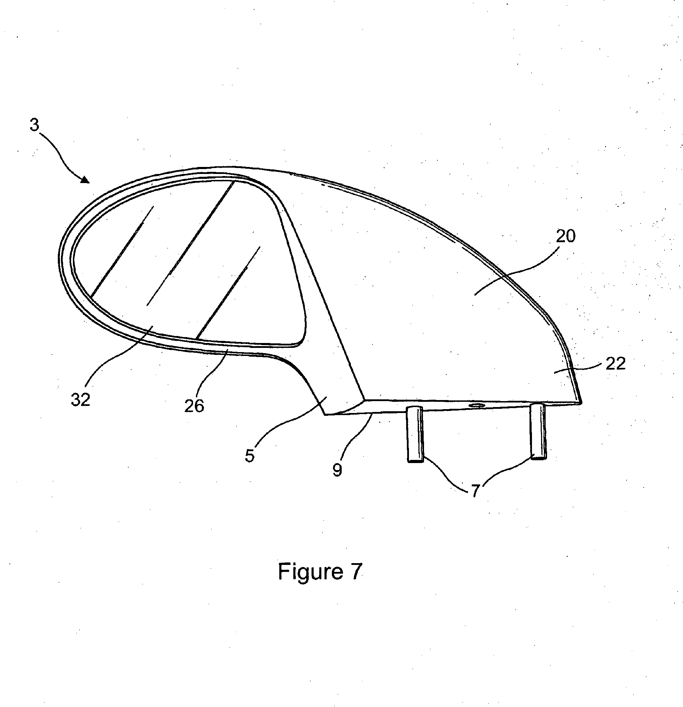

Referring to Figures 3 to 7, the rear view side mirror assembly 1 comprises a head portion 3 and a stem portion 5. The stem portion 5 comprises connecting means 7 disposed at a first end 9 thereof for connecting the rear view side mirror assembly 1 to the body of a vehicle, as will be described in more detail later. A second end 10 of the stem portion 5 is coupled to the head portion 3. In the present embodiment, the stem portion 5 and the head portion 3 are formed integrally with one another.

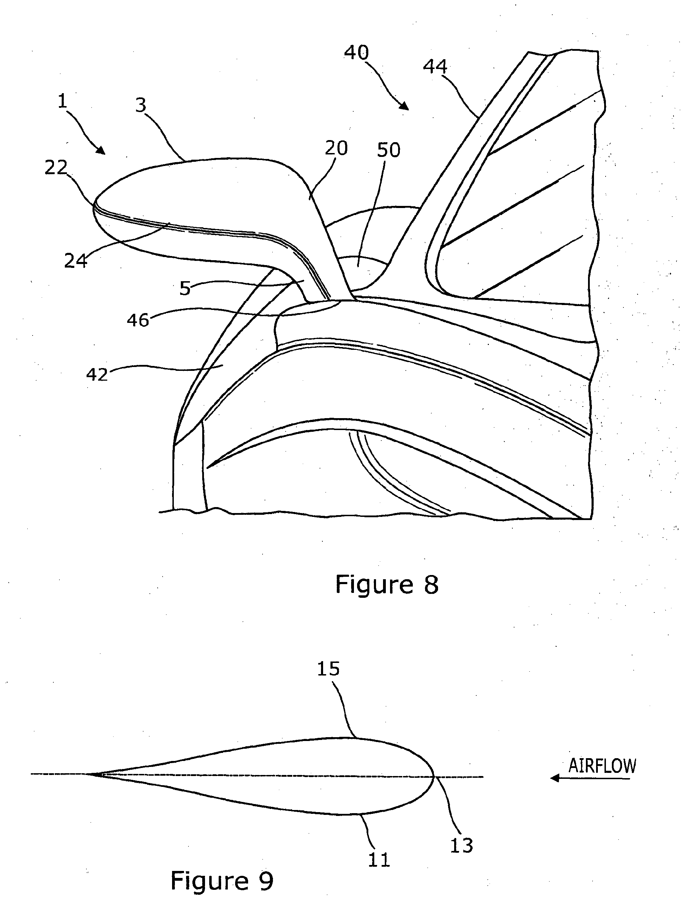

The stem portion 5 has an aerofoil cross-section and comprises an inboard surface 11, arranged to face toward the body of a vehicle when attached thereto, and an outboard surface 15 arranged to face away from the body of a vehicle when attached thereto. The centre line 13 of the aerofoil, which defines a leading edge at the boundary between the inboard and outboard surfaces 11, 15 of the stem portion 5, determines a line of attack with respect to the air flow around the mirror assembly 1 when the associated vehicle is in motion. This is illustrated further by the schematic cross-section shown in Figure 9. The inboard and outboard surfaces 11, 15 are curved or cambered. The centre line 13 of the aerofoil is the locus of points midway between each of the surfaces 11, 15.

Accordingly, the centre line 15 intersects the point at which the inboard and outboard surfaces 11, 15 meet at the leading edge of the aerofoil. When a flow of air is incident on the leading edge of the stem portion 5, the flow is diverted such that a portion of the air flows over the inboard surface 11 and a portion flows over the outboard surface 15, as will be described in more detail later.

The aerofoil cross-section of the stem portion 5 causes minimal interference to the airflow along the inboard side of the mirror assembly 1. Although Figure 9 shows a symmetrical aerofoil, in the embodiment of the present invention shown in Figures 3 to 7, the camber of the inboard surface 11 is flatter than the camber of the outboard surface 15. The stem portion 5 has a substantially constant profile along its height. The height and placement of the stem portion 5 is determined by vision requirements of the driver in the vehicle to which the mirror assembly 1 is attached.

The head portion 3 comprises an inboard surface 20, an outboard surface 22, a front surface 24, a rear surface 26, an upper surface 28 and a lower surface 30. As explained previously, the head portion 3 adjoins the second end 10 of the stem portion 5, such that the height of the stem portion 5 determines the position of the head portion 3 relative to the vehicle to which the mirror assembly 1 is attached. The head portion 3 also comprises a mirror plate 32 which is accommodated in an opening in the rear surface of the head portion 3. The mirror plate 32 may be mounted such that it is movable within the head portion 3 to allow it to be adjusted for the requirements of any particular driver of a vehicle. For example, the mirror plate 32 may be mounted using a ball and socket arrangement and one or more electric motors may be employed in combination with suitable transmission means to enable the mirror plate 32 to be tilted about one or more axes.

The outboard surface 22, upper surface 28 and lower surface 30 of the head portion 3 each extend substantially perpendicularly from the periphery of the rear surface 26 and curve towards each other so as to define the volume in which the mirror plate 32 is accommodated. Accordingly, the front surface 24 of the head portion 3 defines transition region between the outboard, upper and lower surfaces 22, 28, 30. As shown particularly in Figure 3, the front surface 24 of the head portion 3 is an extension of the centre line 13 of the stem portion 5 and extends approximately horizontally from the inboard surface 20 of the head portion 3 to the outboard surface 22.

Referring to Figure 8, the rear view side mirror assembly 1 is mounted to the body of a vehicle. In the presently described embodiment, the vehicle is a car 40 and, more particularly, a car in which the engine is rear-mounted. The mirror assembly 1 is mounted to the side of the car body 42 adjacent to the A-pillar 44 of the car 40. In more detail, the side of the car body 42 comprises a shoulder portion 46 which projects approximately horizontally from the base of a side window (not shown in Figure 8). The first end 9 of the stem portion 5 of the mirror assembly 1 is mounted on the shoulder portion 46 by virtue of the connecting means 7 (not shown in Figure 8) co-operating with corresponding holes provided in the shoulder portion 46 (not shown). The car 40 also comprises an air intake 50 or vent, disposed in the side of the car body 42, rearwards and downstream of the mirror assembly 1.

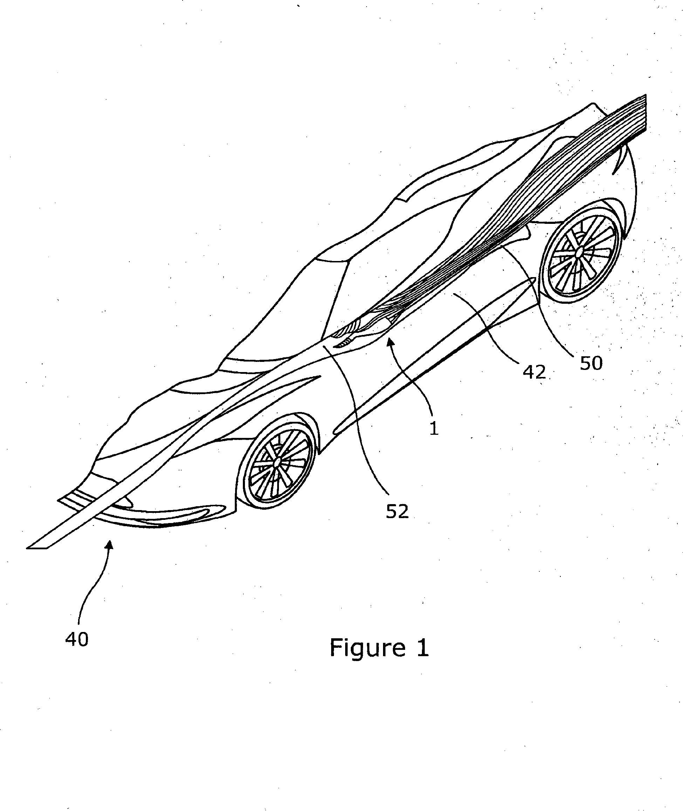

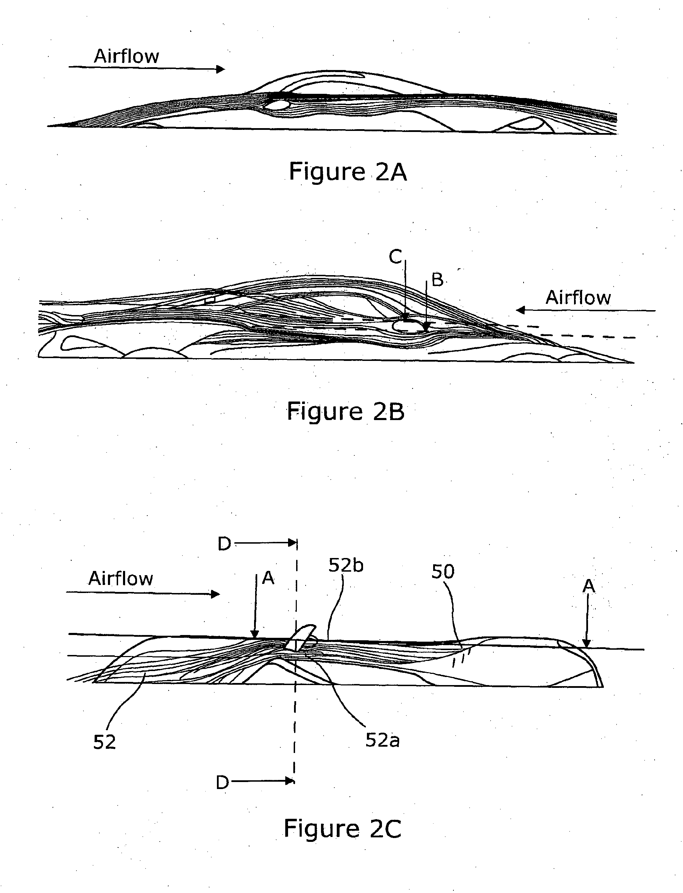

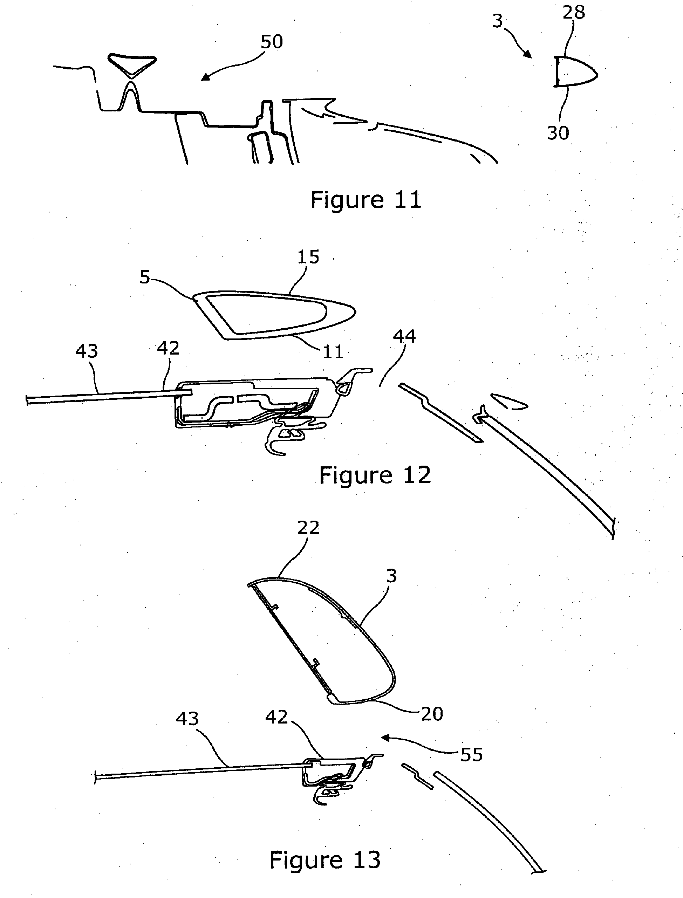

Reference will now be made to Figures 1, 2A, 2B and 2C, and the cross-sections of Figures 11 to 15 in order to describe the mirror assembly 1 and the operation thereof in more detail. As shown in Figure 1, when the car 40 moves in a forward direction, air flows along the side of the car body 42 and is incident on the mirror assembly 1. In particular, the flow of air 52 is directed by the mirror assembly 1 toward the air intake 50 disposed toward the rear of the car 40, as will be described in more detail below.

As shown in Figure 12, the inboard camber of the stem portion 5 (i.e. the camber of the inboard surface 11) is substantially parallel to the adjacent surface of the car body 42 (i.e. the glass 43 which forms the side window in the door of the vehicle in this case). The flatness of the inboard camber directs the airflow 52a towards the rear air intake 50 while the camber on the outboard surface 15 of the stem portion 5 smoothly directs the airflow 52b around the stem portion 5 so as to join the inboard airflow 52a aft (i.e. downstream) of the stem portion 5. This is illustrated in particular in Figure 2C, in which it can be seen that the air flow 52 incident on the car 40 is divided by the stem portion 5 of the mirror assembly 1 into an inboard airflow 52a, which flows between the inboard surface 11 of the stem portion 5 and the adjacent car body 42, and an outboard airflow 52b, which flows across the outboard surface 15 of the stem portion 5. Downstream of the mirror assembly 1, the inboard and outboard airflows 52a, 52b rejoin one another.

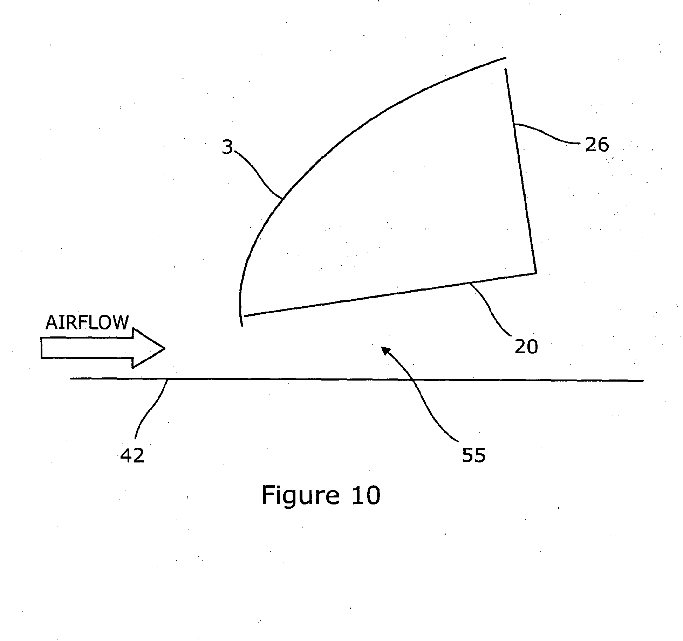

As shown schematically in Figure 10, the inboard surface 20 of the head portion 3 is substantially parallel to the adjacent surface of the vehicle body 42 (i.e. the glass which forms the side window in the door of the vehicle in this case) and is configured to act as a diffuser and to smooth the air flow towards the rear of the car 40. The camber profile of the inboard surface 20 of the head portion 3 is substantially the same as the inboard profile 11 of the stem portion 5, and provides the same function. This is shown in more detail in Figure 13. The gap 55 between the inboard surface 20 of the head portion 3 and the vehicle body 42/glass 43 acts as a duct, and can be used to direct air towards the rear air intake 50. The diffusing effect also advantageously reduces wind noise.

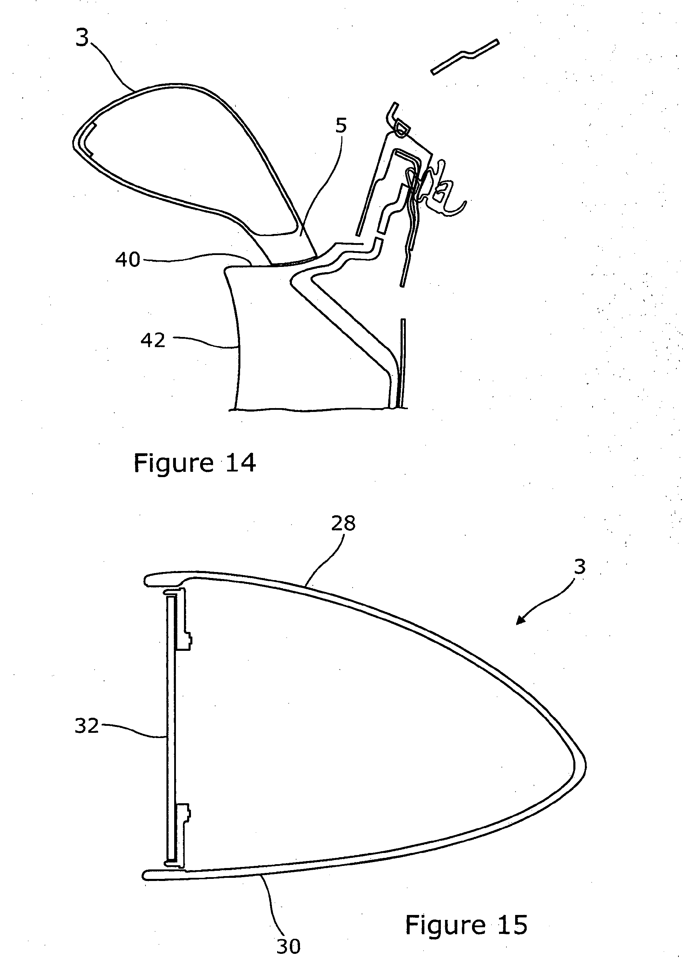

The outboard surface 22 of the head portion 3 is tapered back towards the side of the car body 42/glass 43, which helps deflect air on the outboard side of the head portion 3 towards the rear air intake 50. The lower surface 30 of the head portion 3 is also configured to deflect air passing under the mirror head towards the rear air intake 50. The lower surface 30 profile has a substantially flat camber and the upper surface 28 of the head portion 3 has a relatively convex camber, which is illustrated particularly in Figures 11 and 15.

The basic inboard aerofoil shape and configuration is employed in order to maintain the same smooth flow of air between the mirror assembly 1 and the car body 42. The head portion 3 may be selected so as to have a shape and configuration to accommodate the mirror plate 32, the size of which is dictated by vision requirements, while maintaining this smooth flow of air about the mirror assembly 1, re-joining the air streams that have been separated by the mirror assembly 1.

The length and other dimensions of the head portion 1 are preferably dictated first by the size of the mirror plate 32 needed, then by tuning the mirror aerodynamic characteristics to ensure the smoothest flow of air around the mirror assembly 1. For example, the curvature of the active aerofoil sections (the outboard surface 15 of the stem portion 5, outboard surface 22 of the head portion 3, and upper surface 28 of the head portion 3) of the mirror assembly 1 are dictated by the desired direction of the air flow (i.e. towards the rear air intake 50), and the opposing complementary surfaces (inboard surface 11 of the stem portion 5, inboard surface 20 of the head portion 3, and lower surface 30 of the head portion 3) are dictated by the need to maintain a smooth, unbroken airflow towards the rear air intake 50.

As explained above, the head portion 3 and the stem portion 5 of the mirror assembly 1 have distinct sets of surfaces that smooth and direct air flow. This advantageously can be used to direct a clean flow of air towards the rear air intake 50.

As shown in Figure 14, the stem portion 5 is mounted on the shoulder portion 46 of the car door away from the door glass (not shown in Figure 14). The stem portion 5 raises the head portion 3 above the shoulder portion 46 of the body 42 and moves it away from the body 42 of the car 40, to promote a cleaner flow of air therebetween. The aerofoil cross-section promotes minimum drag and lift, providing a clean flow of air about the stem portion 5. Moreover, the upright design of the stem portion 5 allows the head portion 3 to be placed far enough away from the car body 42 to prevent/alleviate noise and aerodynamic problems. The design maximises clean airflow between the stem portion 5 and the vehicle body 42.

The rear view side mirror assembly 1 described above comprises features that assist the clean flow of air towards the rear air intake 50 of a vehicle to which the mirror assembly is attached. The mirror assembly 1 is optimised for aerodynamic performance, which means that the air flow about the mirror stem and head portions 5, 3 is clearly reducing turbulence towards the rear of the vehicle.

The features of the inboard and lower surfaces 20, 30 of the head portion 3 ensure that the clean air flow is advantageously directed towards the rear air intake 50. Providing an aerodynamically clean air flow means that the cooling efficiency of the car is increased with minimal impact to aerodynamic performance.

The above described mirror assembly 1 achieves three-dimensional airflow control which provides a smooth separation of air about the mirror head and stem portions 3, 5, and directs the re-joined airflow towards a target (in this case, the rear air intake vent). This design of having an opposing, complementing surfaces paired with active airflow controlling surfaces means that the flow of air can be advantageously controlled about the volume of the mirror assembly, leading increased efficiency of the rear air intake coupled with increased aerodynamic benefits for the mirror. Plan and side airflows are uniquely controlled by the design of the mirror assembly to divert clean airflow to the rear air intake.

While reference is made generally to a vehicle in the above description, and many components corresponding to a car are depicted and described, it should be appreciated that the above-described embodiments of the invention are applicable for use with any suitable vehicle and not necessarily a car.

It will be appreciated that reference to the position of parts or components of the assembly with respect to the orientation of the vehicle, such as front, rear, upwards and downwards, refer to a vehicle orientated for normal forwards/rearwards translatory movement.

## Claims

1. A rear view side mirror assembly (1) for a vehicle comprising;
a head portion (3) for housing a mirror (32); and
a stem portion (5) for coupling the head portion to the body of a vehicle, wherein the stem portion has an aerofoil cross-section,
the stem portion comprises an inboard surface (11) arranged to face toward the body of the vehicle when attached thereto, and an outboard surface (15) arranged to face away from the body of the vehicle when attached thereto, **characterised in that**: each of said inboard and outboard surfaces are cambered;
Wherein the camber of the inboard surface (11) is substantially parallel to the adjacent surface of the car body (42), and the camber of the inboard surface (11) of the stem portion (5) is furthermore relatively flat compared to the camber of the outboard surface (15) of the stem portion (5) so as to minimise turbulence in the flow of air thereacross, in use, and the camber of the outboard surface (15) of the stem portion (5) is arranged such that the flow of air (52) thereacross is directed in an inboard direction so as to merge with the flow of air across the inboard surface of the stem portion at a point downstream of the mirror assembly, in use.

2. A rear view side mirror assembly (1) according to claim 1, the head portion comprising an inboard surface (11) and an outboard surface (15), wherein the inboard surface (11) of the head portion (3) has substantially the same camber as the inboard surface (11) of the stem portion (5).

3. A rear view side mirror assembly (1) according to claim 2, the head portion (3) comprising an inboard surface (11) and an outboard surface (15), wherein the outboard surface (15) of the head portion (3) is arranged such that the flow of air (52) thereacross is directed in an inboard direction so as to merge with the flow of air across the inboard surface (11) of the head portion (3) at a point downstream of the mirror assembly, in use.

4. A rear view side mirror assembly (1) according to claim 2or claim 3, wherein the inboard surface (20) of the head portion (3) is continuous with the inboard surface (11) of the stem portion.

5. A rear view side mirror assembly (1) according to any preceding claim, wherein the head portion (3) comprises a lower surface (30) and the stem portion (5) extends from the lower surface (30) of the head portion.

6. A rear view side mirror assembly (1) according to any preceding claim, wherein the head portion (3) comprises a lower surface (30) having a substantially flat camber.

7. A rear view side mirror assembly (1) according to any preceding claim, wherein the head portion (3) comprises a rear surface (26), the rear surface (26) comprising an opening therein for accommodating a mirror plate.

8. A rear view side mirror assembly (1) according to any preceding claim wherein the cross-section of the stem portion (5) is substantially the same along its length.

9. A rear view side mirror assembly(1) according to any preceding claim, wherein the stem portion (5) and the head portion (3) are formed integrally with one another.

10. A rear view side mirror assembly (1) according to any preceding claim, wherein the stem portion (5) comprises connecting means (7) disposed at a first end thereof, opposite the head portion (3), for connecting the stem portion to the body of the vehicle.

11. A vehicle having a vehicle body and comprising a rear view side mirror assembly (1) according to any one of claims 1 to 10 mounted on a side of the vehicle body.

12. A vehicle according to claim 11, wherein the side of the vehicle body comprises a shoulder portion (46) and the stem portion (5) of the rear view side mirror assembly is mounted on the shoulder portion.

13. A vehicle according to claim 11 or 12 wherein the vehicle comprises at least one A-pillar (44) and the rear view side mirror assembly (1) is mounted adjacent to a base of the at least one A-pillar (44).

14. A vehicle according to any one of claims 11 to 13, wherein the vehicle comprises an air intake (50) disposed in the side of the vehicle body downstream of the rear view side mirror assembly (1).

15. A vehicle according to claim 14, wherein the rear view side mirror assembly (1) is mounted such the head portion is spaced from the side of the vehicle body, by virtue of the stem portion, so as to allow, in use, the unobstructed flow of air along the side of the vehicle body into the air intake.

16. A vehicle according to claim 15, wherein the vehicle is rear- or mid-engined and the air intake (50) provides cooling for the engine.

17. A vehicle according to claim 16, wherein the vehicle is a hybrid or electric vehicle and the air intake (50) provides cooling for a battery pack.

## Patentansprüche

1. Seitenrückspiegelanordnung (1) für ein Fahrzeug, Folgendes umfassend:
einen Kopfabschnitt (3) zum Aufnehmen eines Spiegels (32); und
einen Stielabschnitt (5) zum Anbringen des Kopfabschnitts an die Karosserie eines Fahrzeugs, wobei der Stielabschnitt einen Tragflächenquerschnitt aufweist;
wobei der Stielabschnitt eine innenliegende Oberfläche (11) aufweist, die so angeordnet ist, dass sie, wenn an der Fahrzeugkarosserie angebracht, nach unten weist, und eine außenliegende Oberfläche (15), die so angeordnet ist, dass sie, wenn an der Fahrzeugkarosserie angebracht, von dieser weg weist, **dadurch gekennzeichnet, dass** sowohl die innenliegende als auch die außenliegende Oberfläche gewölbt ist;
wobei die Wölbung der innenliegenden Oberfläche (11) im Wesentlichen parallel zur angrenzenden Oberfläche der Fahrzeugkarosserie (42) ist und die Wölbung der innenliegenden Oberfläche (11) des Stielabschnitts (5) des Weiteren im Vergleich zur Wölbung der außenliegenden Oberfläche (15) des Stielabschnitts (5) relativ flach ist, um dadurch im Gebrauch Turbulenzen im Luftstrom darüber zu vermindern, und die Wölbung der außenliegenden Oberfläche (15) des Stielabschnitts (5) so angeordnet ist, dass der Luftstrom (52) darüber nach innen gerichtet wird, so dass er im Gebrauch mit dem Luftstrom über der innenliegenden Oberfläche des Stielabschnitts an einem Punkt stromabwärts der Spiegelanordnung zusammengeführt wird.

2. Seitenrückspiegelanordnung (1) nach Anspruch 1, wobei der Kopfabschnitt eine innenliegende Oberfläche (11) und eine außenliegende Oberfläche (15) umfasst, wobei die innenliegende Oberfläche (11) des Kopfabschnitts (3) im Wesentlichen die gleiche Wölbung wie die innenliegende Oberfläche (11) des Stielabschnitts (5) aufweist.

3. Seitenrückspiegelanordnung (1) nach Anspruch 2, wobei der Kopfabschnitt (3) eine innenliegende Oberfläche (11) und eine außenliegende Oberfläche (15) umfasst, wobei die außenliegende Oberfläche (15) des Kopfabschnitts (3) so angeordnet ist, dass der Luftstrom (52) darüber nach innen gerichtet wird, so dass er im Gebrauch mit dem Luftstrom über der innenliegenden Oberfläche (11) des Kopfabschnitts (3) an einem Punkt stromabwärts der Spiegelanordnung zusammengeführt wird.

4. Seitenrückspiegelanordnung (1) nach Anspruch 2 oder Anspruch 3, wobei die innenliegende Oberfläche (20) des Kopfabschnitts (3) mit der innenliegenden Oberfläche (11) des Stielabschnitts fortlaufend ist.

5. Seitenrückspiegelanordnung (1) nach einem der vorhergehenden Ansprüche, wobei der Kopfabschnitt (3) eine untere Oberfläche (30) umfasst und der Stielabschnitt (5) sich von der unteren Oberfläche (30) des Kopfabschnitts aus erstreckt.

6. Seitenrückspiegelanordnung (1) nach einem der vorhergehenden Ansprüche, wobei der Kopfabschnitt (3) eine untere Oberfläche (30) mit einer im Wesentlichen flachen Wölbung aufweist.

7. Seitenrückspiegelanordnung (1) nach einem der vorhergehenden Ansprüche, wobei der Kopfabschnitt (3) eine hintere Oberfläche (26) aufweist, wobei die hintere Oberfläche (26) eine Öffnung in dieser zum Aufnehmen einer Spiegelplatte aufweist.

8. Seitenrückspiegelanordnung (1) nach einem der vorhergehenden Ansprüche, wobei der Querschnitt des Stielabschnitts (5) über dessen Länge im Wesentlichen gleichbleibend ist.

9. Seitenrückspiegelanordnung (1) nach einem der vorhergehenden Ansprüche, wobei der Stielabschnitt (5) und der Kopfabschnitt (3) einstückig miteinander ausgebildet sind.

10. Seitenrückspiegelanordnung (1) nach einem der vorhergehenden Ansprüche, wobei der Stielabschnitt (5) Verbindungsmittel (7) umfasst, die an einem ersten Ende desselben gegenüber dem Kopfabschnitt (3) angeordnet sind, um den Stielabschnitt an der Fahrzeugkarosserie anzubringen.

11. Fahrzeug mit einer Fahrzeugkarosserie und umfassend eine an einer Seite der Fahrzeugkarosserie angebrachte Seitenrückspiegelanordnung (1) nach einem der Ansprüche 1 bis 10.

12. Fahrzeug nach Anspruch 11, wobei die Seite der Fahrzeugkarosserie einen Schulterabschnitt (46) aufweist und der Stielabschnitt (5) der Seitenrückspiegelanordnung am Schulterabschnitt angebracht ist.

13. Fahrzeug nach Anspruch 11 oder 12, wobei das Fahrzeug wenigstens eine A-Säule (44) aufweist und die Seitenrückspiegelanordnung (1) angrenzend an eine Basis der wenigstens einen A-Säule (44) angebracht ist.

14. Fahrzeug nach einem der Ansprüche 11 bis 13, wobei das Fahrzeug einen Lufteinlass (50) aufweist, der in der Seite des Fahrzeugs stromabwärts der Seitenrückspiegelanordnung (1) angeordnet ist.

15. Fahrzeug nach Anspruch 14, wobei die Seitenrückspiegelanordnung (1) so angebracht ist, dass der Kopfabschnitt durch den Stielabschnitt von der Seite der Fahrzeugkarosserie beabstandet ist, so dass im Gebrauch der ungehinderte Luftstrom entlang der Seite der Fahrzeugkarosserie in den Lufteinlass ermöglicht wird.

16. Fahrzeug nach Anspruch 15, wobei das Fahrzeug über einen Heckmotor oder einen Mittelmotor verfügt und der Lufteinlass (50) die Kühlung für den Motor bereitstellt.

17. Fahrzeug nach Anspruch 16, wobei das Fahrzeug ein Hybrid- oder ein Elektrofahrzeug ist und der Lufteinlass (50) die Kühlung für einen Akku bereitstellt.

## Revendications

1. Ensemble rétroviseur latéral extérieur (1) pour un véhicule comprenant :
une partie tête (3) destinée à loger un miroir (32) ; et
une partie tige (5) destinée à coupler la partie tête à la carrosserie d'un véhicule, dans lequel la partie tige a une section transversale à profil aérodynamique,
la partie tige comprend une surface intérieure (11) agencée pour être orientée vers la carrosserie du véhicule lorsqu'elle est fixée à celle-ci, et une surface extérieure (15) agencée pour être orientée en éloignement de la carrosserie du véhicule lorsqu'elle est fixée à celle-ci ; **caractérisé en ce que** chacune desdites surfaces intérieure et extérieure est cambrée ;
dans lequel la cambrure de la surface intérieure (11) est sensiblement parallèle à la surface adjacente de la carrosserie de voiture (42), et la cambrure de la surface intérieure (11) de la partie tige (5) est en outre relativement plate par rapport à la cambrure de la surface extérieure (15) de la partie tige (5) de façon à minimiser les turbulences dans le flux d'air la traversant, en utilisation, et la cambrure de la surface extérieure (15) de la partie tige (5) est agencée de sorte que le flux d'air (52) la traversant soit dirigé dans une direction vers l'intérieur de façon à fusionner avec le flux d'air traversant la surface intérieure de la partie tige au niveau d'un point en aval de l'ensemble rétroviseur, en utilisation.

2. Ensemble rétroviseur latéral extérieur (1) selon la revendication 1, la partie tête comprenant une surface intérieure (11) et une surface extérieure (15), dans lequel la surface intérieure (11) de la partie tête (3) a sensiblement la même cambrure que la surface intérieure (11) de la partie tige (5).

3. Ensemble rétroviseur latéral extérieur (1) selon la revendication 2, la partie tête (3) comprenant une surface intérieure (11) et une surface extérieure (15), dans lequel la surface extérieure (15) de la partie tête (3) est agencée de sorte que le flux d'air (52) la traversant soit dirigé dans une direction vers l'intérieur de façon à fusionner avec le flux d'air traversant la surface intérieure (11) de la partie tête (3) au niveau d'un point en aval de l'ensemble rétroviseur, en utilisation.

4. Ensemble rétroviseur latéral extérieur (1) selon la revendication 2 ou la revendication 3, dans lequel la surface intérieure (20) de la partie tête (3) est continue avec la surface intérieure (11) de la partie tige.

5. Ensemble rétroviseur latéral extérieur (1) selon l'une quelconque des revendications précédentes, dans lequel la partie tête (3) comprend une surface inférieure (30) et la partie tige (5) s'étend à partir de la surface inférieure (30) de la partie tête.

6. Ensemble rétroviseur latéral extérieur (1) selon l'une quelconque des revendications précédentes, dans lequel la partie tête (3) comprend une surface inférieure (30) ayant une cambrure sensiblement plate.

7. Ensemble rétroviseur latéral extérieur (1) selon l'une quelconque des revendications précédentes, dans lequel la partie tête (3) comprend une surface arrière (26), la surface arrière (26) comprenant une ouverture à l'intérieur destinée à loger une plaque de rétroviseur.

8. Ensemble rétroviseur latéral extérieur (1) selon l'une quelconque des revendications précédentes, dans lequel la section transversale de la partie tige (5) est sensiblement la même sur sa longueur.

9. Ensemble rétroviseur latéral extérieur (1) selon l'une quelconque des revendications précédentes, dans lequel la partie tige (5) et la partie tête (3) sont formées solidairement l'une avec l'autre.

10. Ensemble rétroviseur latéral extérieur (1) selon l'une quelconque des revendications précédentes, dans lequel la partie tige (5) comprend un moyen de raccordement (7) disposé au niveau d'une première extrémité de celle-ci, en face de la partie tête (3), afin de raccorder la partie tige à la carrosserie du véhicule.

11. Véhicule ayant une carrosserie de véhicule et comprenant un ensemble rétroviseur latéral extérieur (1) selon l'une quelconque des revendications 1 à 10 monté sur un côté de la carrosserie de véhicule.

12. Véhicule selon la revendication 11, dans lequel le côté de la carrosserie de véhicule comprend une partie épaulement (46) et la partie tige (5) de l'ensemble rétroviseur latéral extérieur est montée sur la partie épaulement.

13. Véhicule selon la revendication 11 ou 12, dans lequel le véhicule comprend au moins un montant avant (44) et l'ensemble rétroviseur latéral extérieur (1) est monté adjacent à une base du au moins un montant avant (44).

14. Véhicule selon l'une quelconque des revendications 11 à 13, dans lequel le véhicule comprend une admission d'air (50) disposée dans le côté de la carrosserie de véhicule en aval de l'ensemble rétroviseur latéral extérieur (1).

15. Véhicule selon la revendication 14, dans lequel l'ensemble rétroviseur latéral extérieur (1) est monté de sorte que la partie tête soit espacée du côté de la carrosserie de véhicule, grâce à la partie tige, de façon à permettre, en utilisation, la non-obstruction du flux d'air le long du côté de la carrosserie de véhicule dans l'admission d'air.

16. Véhicule selon la revendication 15, dans lequel le véhicule est à moteur arrière ou central et l'admission d'air (50) assure un refroidissement du moteur.

17. Véhicule selon la revendication 16, dans lequel le véhicule est un véhicule hybride ou électrique et l'admission d'air (50) assure un refroidissement de bloc-batterie.
